Europäisches Patentamt

European Patent Office

Office européen des brevets

(19)

(11) **EP 1 447 931 A1**

## (12) EUROPEAN PATENT APPLICATION
published in accordance with Art. 158(3) EPC

(43) Date of publication:
**18.08.2004 Bulletin 2004/34**

(21) Application number: **02768025.5**

(22) Date of filing: **24.09.2002**

(51) Int Cl.[7]: **H04J 11/00**, H04J 13/04

(86) International application number:
**PCT/JP2002/009783**

(87) International publication number:
**WO 2003/030423 (10.04.2003 Gazette 2003/15)**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **27.09.2001 JP 2001297174**

(71) Applicant: **MATSUSHITA ELECTRIC INDUSTRIAL
CO., LTD.
Kadoma-shi, Osaka 571-8501 (JP)**

(72) Inventor: **INOGAI, Kazunori
Yokohama-shi, Kanagawa 236-0032 (JP)**

(74) Representative: **Grünecker, Kinkeldey,
Stockmair & Schwanhäusser Anwaltssozietät
Maximilianstrasse 58
80538 München (DE)**

## (54) OFDM TRANSMITTER AND OFDM TRANSMITTING METHOD

(57)   When an OFDM-CDMA signal is formed, the CDMA processing section 130 spreads transmission data U1(k) using even symmetric codes and odd symmetric codes as spreading codes and the OFDM processing section 140 modulates a plurality of mutually orthogonal subcarriers by adapting even symmetric or odd symmetric chips after spreading processing so that mutually symmetric chips are assigned to subcarriers having mutually opposite phases. This causes signal points of modulated signals of the transmission data to move on different straight lines on the I-Q plane. As a result, it is possible to disperse signal points uniformly and thereby suppress the peak voltage.

101(102~104) TRANSMISSION PROCESSING BLOCK

FIG.11

EP 1 447 931 A1

**Description**

Technical Field

The present invention relates to an OFDM transmission apparatus and OFDM transmission method designed to modulate transmission data according to an OFDM-CDMA system which combines an OFDM (Orthogonal Frequency Division Multiplexing) modulation system with a CDMA (Code Division Multiple Access) system and then transmit the data.

Background Art

In conventional transmission according to an OFDM-CDMA system which combines an OFDM system and CDMA system, high quality transmission data can be transmitted to many communication terminals at high speed by effectively using the resistance to frequency selective fading by the OFDM modulation system and the resistance to interference and noise by the CDMA modulation system.

The OFDM-CDMA system is roughly divided into a time area spreading system and a frequency area spreading system. The time area spreading system arranges spread signals which are spread in chip units by a spreading code within a same subcarrier in a time direction. On the other hand, the frequency area spreading system arranges spread signals which are spread in chip units by assigning them to different subcarriers.

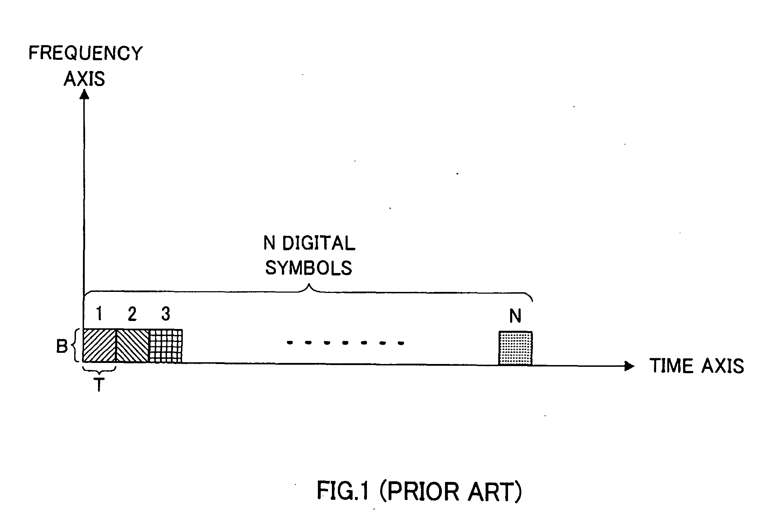

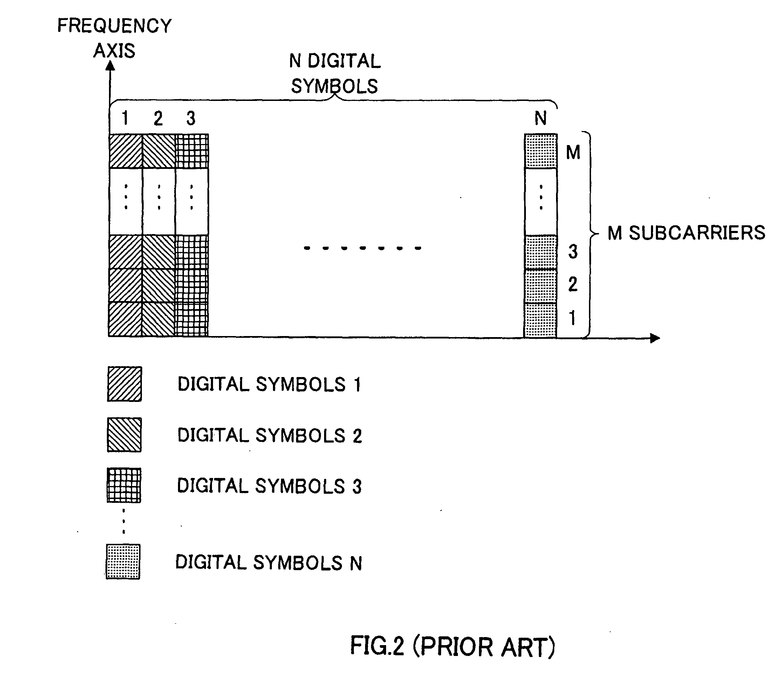

The frequency area spreading system will be explained below. FIG.1 is a schematic view showing a state of digital symbols before modulation processing according to the OFDM-CDMA system and FIG. 2 is a schematic view showing an arrangement of chips after modulation processing according to the frequency area spreading system. According to the frequency area spreading system, each of N digital symbols (FIG.1) which constitute a serial data string is multiplied by a spreading code with a spreading factor M.

As a result, M chips are formed for each symbol and the chips are arranged on a plurality of subcarriers at a same time. In this case, carrying out IFFT (Inverse Fast Fourier Transform) processing facilitates arrangement of chips on the plurality of subcarriers. Thus, according to the frequency area spreading system, chips after spreading are arranged on the frequency direction (FIG.2).

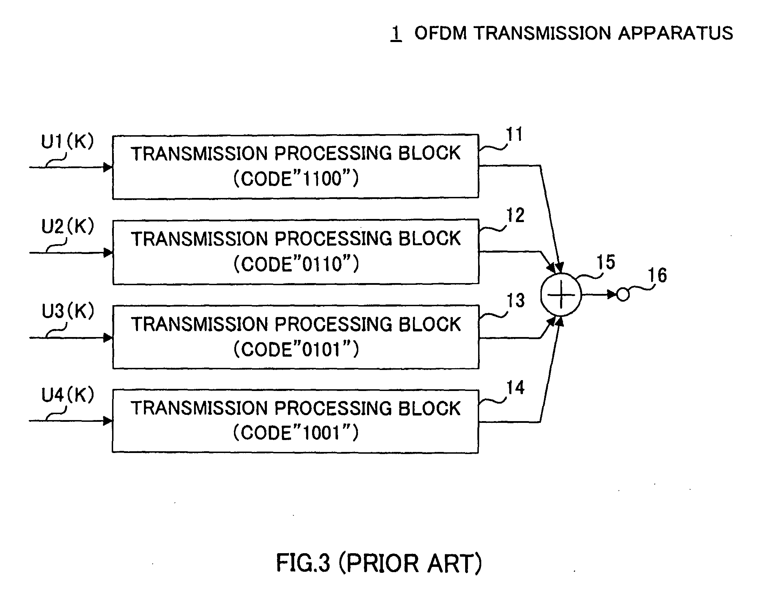

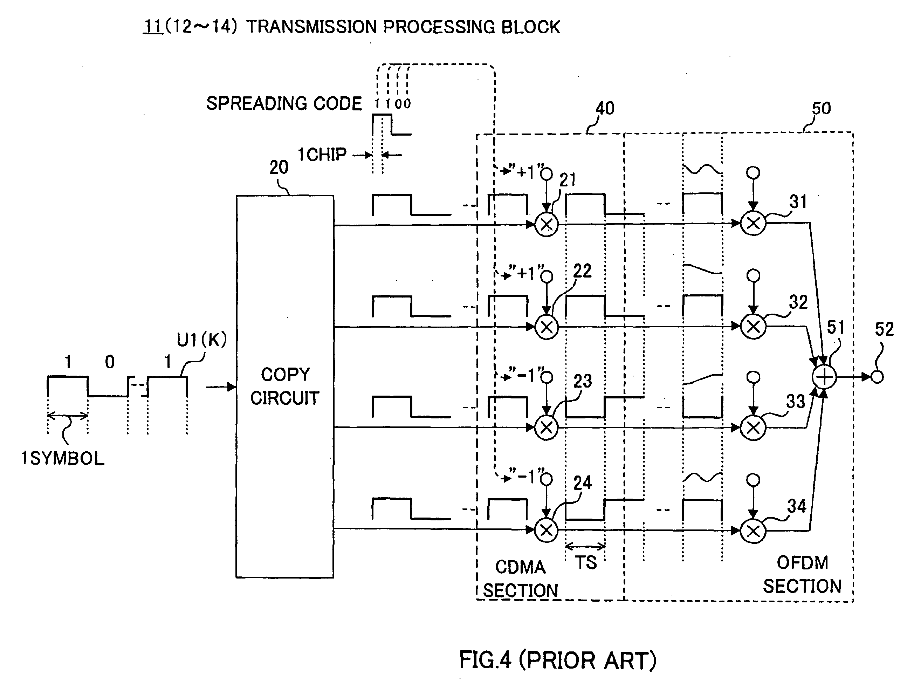

A configuration example of a conventional OFDM transmission apparatus that implements this frequency spreading system will be shown in FIG.3 and FIG.4. FIG.3 and FIG.4 will describe a case where four subcarriers are formed and different pieces of transmission data are transmitted to four users. As shown in FIG.3, an OFDM transmission apparatus 1 is fed user data U1(k) to U4(k) which are directed to users to transmission processing blocks 11 to 14 which correspond in number to the users.

The transmission processing blocks 11 to 14 carry out spreading processing on the user data U1(k) to U4(k) using different spreading codes for the input data. In the example of FIG.3, "1100", "0110", "0101" and "1001" are used as spreading codes. By the way, when a cross correlation is established for these four spreading codes by correlating +1 with 1 and -1 with 0, any combination will result in 0, and therefore it is possible to separate only symbols for the own station by carrying out dispreading using the same spreading code on the receiving side. For example, even if a symbol spread with a spreading code "1100" and a symbol spread with a spreading code "0101" are multiplexed, its cross correlation is $1\times(-1)+1\times1+(-1)\times(-1)+(-1)\times1=0$, and therefore the output of the symbol spread by the spreading code "1100" becomes 0 even if despread by the spreading code "0101" and cannot be reconstructed.

Furthermore, the transmission processing blocks 11 to 14 modulate different subcarriers using the chips obtained through spreading processing. An addition circuit 15 adds up OFDM-CDMA signals obtained through the transmission processing blocks 11 to 14.

The transmission processing blocks 11 to 14 are each constructed as shown in FIG.4. FIG.4 shows the transmission processing block 11 and spreads user the data U1(k) using the spreading code "1100." First, the user data U1(k) is input to a copy circuit 20. The user data U1(k) corresponding to subcarriers copied by the copy circuit 20 is sent to multiplication circuits 21 to 24 that form a CDMA processing section 40.

The multiplication circuits 21 to 24 multiply each symbol by a multiplication value corresponding to the spreading code "1100" (which associates "+1" with "1" of spreading code "1100" and "-1" with "0"). More specifically, a multiplication circuit 21 multiplies a multiplication value "+1", a multiplication circuit 22 multiplies a multiplication value "+1", a multiplication circuit 23 multiplies a multiplication value "-1" and a multiplication circuit 24 multiplies a multiplication value "-1."

The multiplication results of the multiplication circuits 21 to 24 are sent to multiplication circuits 31 to 34 of an OFDM processing section 50 . The multipliers 31 to 34 multiply symbols which are respective frequency spread outputs by subcarrier waveforms of frequencies 3/2 times, 1/2 times, -1/2 times and -3/2 times a symbol rate $Ts^{-1}$ (assuming the symbol time length of the user data is Ts) at the same timing. By the way, 3/2 times, 1/2 times, -1/2 times or -3/2 times here means that the frequency fc of a subcarrier expressed in a complex number $e^{j2\ddot{o}fct}$ is (3/2)Ts, (1/2)Ts, (-1/2)Ts or (-3/2)Ts.

The modulated subcarrier signals modulated by the spread chips obtained from the multiplication circuits 31 to 34 are all added up by an adder 51 and a transmission OFDM-CDMA signal is output from a transmission output terminal 52.

By the way, the configuration of this conventional example assumes all signals as real number values (assuming BPSK modulation), but the same applies to the case of a complex number (QPSK modulation, etc.). In this case, it is only necessary to replace all symbols, spreading codes, adders and multipliers by those corresponding to complex numbers.

On the other hand, in the conventional OFDM transmission apparatus using the above-described OFDM-CDMA system, a peak amplitude is generated when transmission symbols of all subcarriers match. That is, a maximum combined signal voltage is generated when the transmission symbols have the same phase.

To put it simply, when it is assumed that a peak voltage of a single carrier is P and an average signal voltage is a, a peak voltage of two carriers becomes $2 \times P$ and an average signal voltage becomes $\sqrt{2} \times a$.

when a large back-off is taken so that this peak voltage falls within the input range of the transmit power amplifier, the power efficiency decreases. On the other hand, when a small back-off is taken, large non-linear distortion is generated when the above-described peak amplitude occurs, causing a problem such as emission of unnecessary radio wave.

Disclosure of Invention

It is an object of the present invention to provide an OFDM transmission apparatus and OFDM transmission method capable of suppressing, when spread signals are superimposed on a plurality of mutually orthogonal subcarriers for transmission (that is, when OFDM-CDMA system based transmission is performed), a peak voltage of a signal combining the plurality of subcarriers.

This object can be attained by forming, when forming an OFDM-CDMA signal, modulated signals that move on different straight lines on an I-Q plane and thereby uniformly dispersing signal points of the modulated signals on the I-Q plane.

To disperse signal points of the modulated signals on the I-Q plane uniformly, the present invention spreads transmission data using even symmetric or odd symmetric spreading codes. Furthermore, the present invention forms an OFDM-CDMA signal by adapting even symmetric or odd symmetric chips after the spreading processing so that mutually symmetric chips are assigned to subcarriers having mutually opposite phases.

Brief Description of Drawings

FIG.1 illustrates a state of digital symbols before modulation processing according to an OFDM-CDMA system;
FIG.2 illustrates a configuration of chips after modulation processing according to a frequency area spreading system;
FIG.3 illustrates a configuration of an OFDM transmission apparatus that carries out transmission according to a conventional OFDM-CDMA system;
FIG.4 illustrates a configuration of the transmission processing block in FIG.3;
FIG.5 illustrates a transmission symbol (1 symbol) assigned to each subcarrier (2N subcarriers);
FIG.6 illustrates spread output using even symmetric codes;
FIG.7 illustrates spread output using odd symmetric codes;
FIG.8 illustrates a signal trail of a spread output signal obtained by an even symmetric code on the I-Q plane;
FIG.9 illustrates a signal trail of a spread output signal obtained by an odd symmetric code on the I-Q plane;
FIG.10 is a block diagram showing a configuration of an OFDM transmission apparatus according to Embodiment 1 of the present invention;
FIG.11 illustrates a configuration of a transmission processing block;
FIG.12A illustrates a signal point vector when an even symmetric code and odd symmetric code are used as in the case of the embodiment;
FIG.12B illustrates a signal point vector when neither even symmetric code nor odd symmetric code is used;
FIG.13 illustrates principles of Embodiment 2 of the present invention;
FIG.14 is a block diagram showing a configuration of an OFDM transmission apparatus according to Embodiment 2 of the present invention;
FIG.15 illustrates a phase rotation operation by a phase shifter according to Embodiment 2;
FIG.16 illustrates principles of Embodiment 3 of the present invention;

FIG.17 illustrates principles of Embodiment 3 of the present invention;

FIG.18 is a block diagram showing a configuration of an OFDM transmission apparatus according to Embodiment 3 of the present invention;

FIG.19 illustrates a configuration of a transmission processing block;

FIG.20 illustrates a phase rotation operation by a phase shifter of Embodiment 3; and

FIG.21 is a block diagram showing a configuration of an OFDM transmission apparatus according to another embodiment.

Best Mode for Carrying out the Invention

With reference now to the attached drawings, embodiments of the present invention will be explained in detail below.

(Embodiment 1)

(1) Principles

The inventor of the present invention has come up with the present invention noticing that a large peak voltage is generated when transmission signals after modulation according to an OFDM-CDMA system have similar phases, and therefore it would be possible to suppress the peak voltage if the phases of the transmission signals after modulation according to an OFDM-CDMA system can be dispersed.

Thus, the present invention spreads transmission data using even symmetric or odd symmetric spreading codes. In addition, by adapting even symmetric or odd symmetric chips after spreading processing so that mutually symmetric chips are assigned to subcarriers having mutually orthogonal phases, the present invention has been successful in dispersing the phase of a final OFDM-CDMA transmission signal.

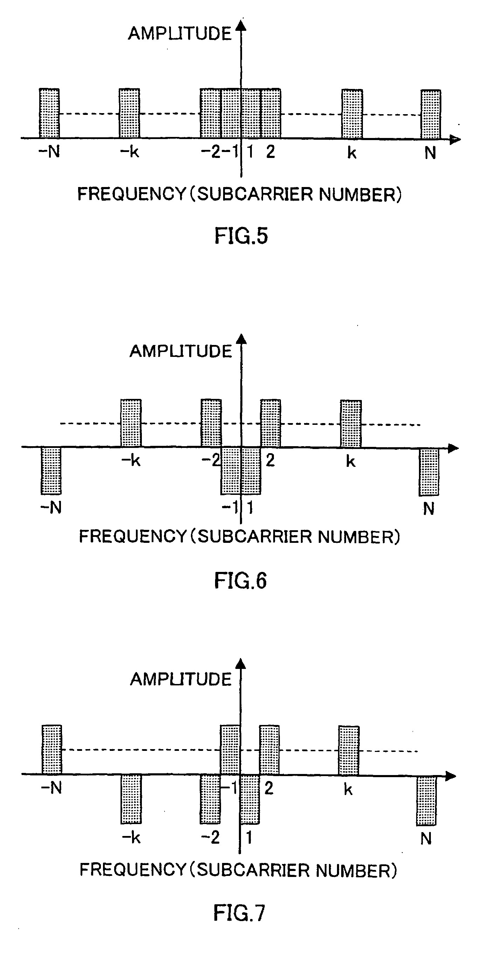

First, principles of this embodiment will be explained using FIG.5 to FIG.9. First, the principle that "using an even symmetric or odd symmetric spreading code will cause a trail of a transmission signal of each code to move only on a straight line on the I-Q plane" will be explained. FIG.5 shows a BPSK transmission symbol (during "+1" transmission) assigned to each subcarrier before frequency area spreading. That is, FIG.5 as a whole corresponds to one symbol of transmission data and this is assigned to $(2 \times N)$ subcarriers during transmission.

Since these subcarriers have a common amplitude, the spread output becomes a spreading code itself (or sign-inverted code during "-1" transmission). As a result, the spread output by even symmetric codes corresponding to one symbol of the transmission data becomes even symmetric as shown in FIG.6. On the other hand, the spread output by odd symmetric codes becomes odd symmetric as shown in FIG.7.

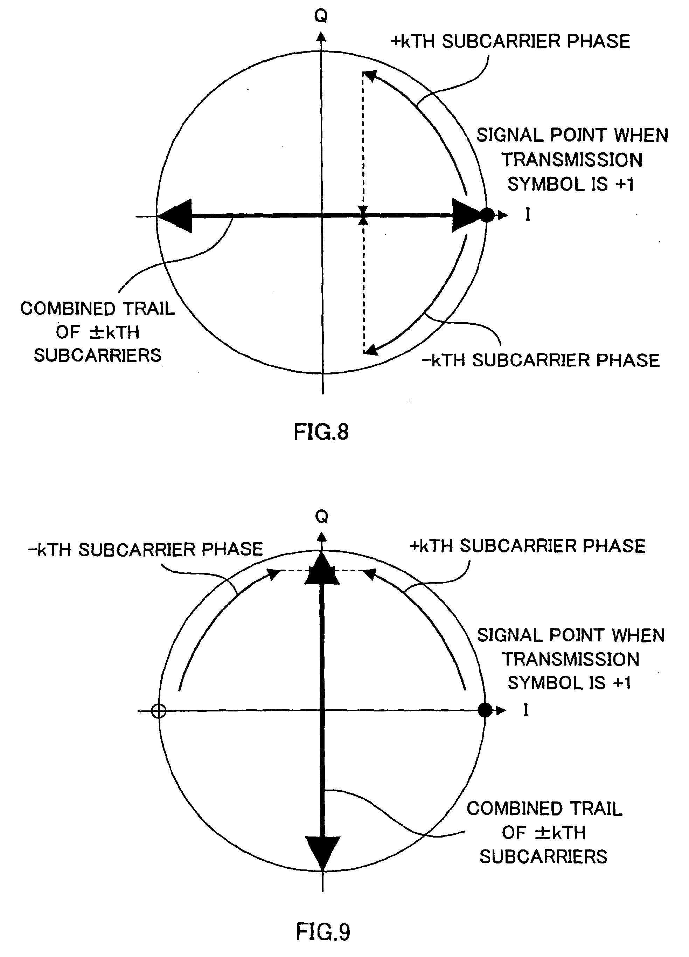

Then, when a signal trail is drawn focused on a pair of subcarriers at a distance corresponding to $\pm k$ subcarriers from the center of the even symmetric output in FIG.6, it looks like FIG.8. In FIG.8, the central frequency of the signal band is regarded as 0[Hz]. When the I-Q plane is considered, a transmission symbol of "+1" is located at a point (1,0) on the I-axis and the subcarrier of +k rotates from that point counterclockwise according to the subcarrier phase and the subcarrier of - k rotates with constant velocity from that point in the opposite direction according to the subcarrier phase. Therefore, the addition result of these vectors is always on the 1-axis and the trail of the OFDM-CDMA signal of the even symmetric output only moves on the 1-axis as a consequence.

Likewise, in the case of odd symmetric output, as shown in FIG.9, the subcarrier of +k rotates clockwise from a point (1,0) as a starting point according to the subcarrier phase and the subcarrier of -k rotates counterclockwise from a point (-1,0) as a starting point according to the subcarrier phase. Therefore, the addition result of the vectors is on the Q-axis and the trail of the OFDM-CDMA signal of the odd symmetric output only moves on the Q-axis as a consequence.

Here, the case where the number of subcarriers is even and the symbol before OFDM-CDMA modulation is BPSK-modulated has been explained. The same applies to a case where the number of subcarriers is odd or the symbol before OFDM-CDMA modulation is another modulation symbol such as QPSK. For example, when the number of subcarriers is odd, it is only necessary to add a DC component and as the trail of a spread signal for modulations other than BPSK modulation, it is only necessary to start to draw the starting point of the rotation of each subcarrier pair from the modulation symbol coordinates. As a result, in any case, using even symmetric or odd symmetric spreading code on frequency area spreading causes the trail of a transmission signal of each code to move only on the straight line on the I-Q plane.

By the way, creating such a subcarrier pair requires even symmetric or odd symmetric chips after spreading processing of to be adapted so that mutually symmetric chips are assigned to subcarriers of mutually opposite phases.

In order to create spreading codes which become even symmetric and odd symmetric, for example, an OVSF (Orthogonal Variable Spreading Factor) generation circuit which is also adopted by the IMT-2000 can be used. Using this OVSF generation circuit allows the same number of even symmetric codes as odd symmetric codes to be obtained.

Furthermore, scrambling for cell recognition is possible using codes which are even symmetric or odd symmetric in the frequency direction and arbitrary in the time direction.

(2) Configuration

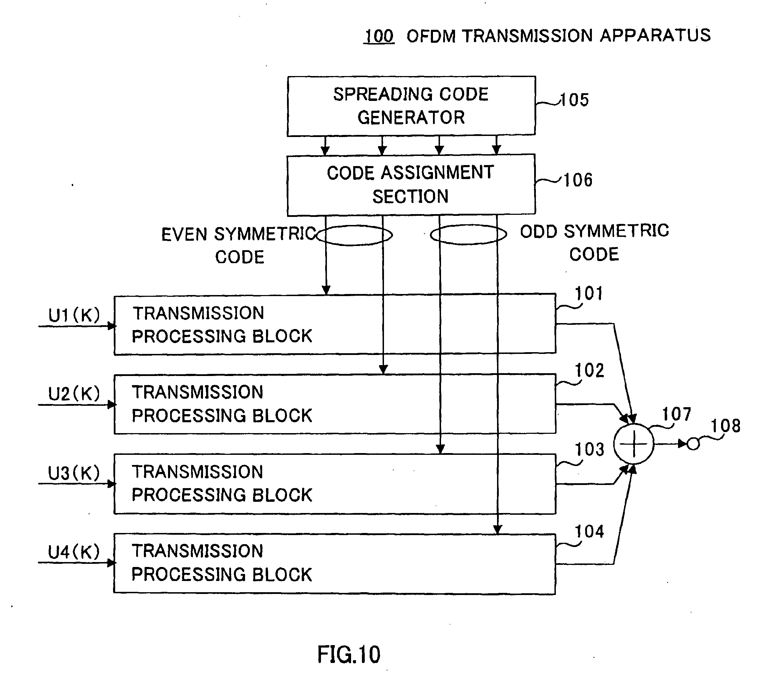

FIG.10 shows an OFDM transmission apparatus according to Embodiment 1 of the present invention. An OFDM transmission apparatus 100 has OFDM-CDMA transmission processing blocks (hereinafter simply referred to as "transmission processing blocks") 101 to 104 corresponding to user data U1(k) to U4(k).

The transmission processing blocks 101 to 104 are fed even symmetric codes and odd symmetric codes generated by a spreading code generator 105 through a code assignment section 106. The code assignment section 106 selects even symmetric codes and odd symmetric codes so that the number of the transmission processing blocks 101 to 104 to which even symmetric codes are assigned is the same as the number of the transmission processing blocks 101 to 104 to which odd symmetric codes are assigned and assigns spreading codes to the respective transmission processing blocks 101 to 104.

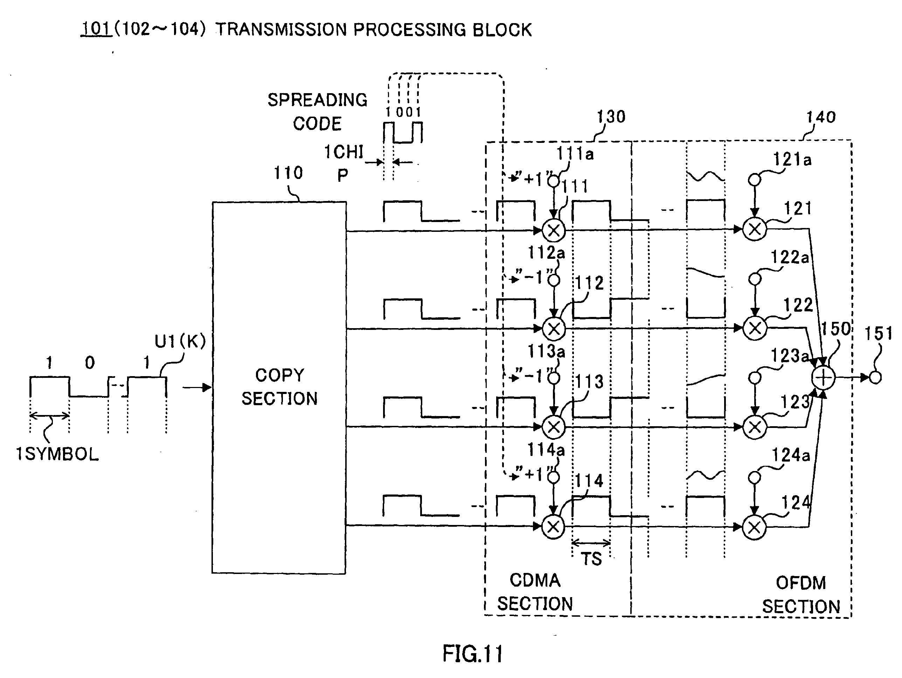

Each of the transmission processing blocks 101 to 104 is constructed as shown in FIG.11. Here, the transmission processing block 101 which processes user data U1(k) will be explained. A copy section 110 of the transmission processing block 101 is fed user data U1(k) and the copy section 110 copies as many pieces of user data U1(k) as the subcarriers.

A plurality of copies of the user data U1 (k) is input to their respective multipliers 111 to 114 of a CDMA processing section 130 as a spreading processing section. Furthermore, the even symmetric codes or odd symmetric codes output from the code assignment section 106 (FIG.10) are input from a code input terminal 111a of the multipliers 111 to 114. An even symmetric code "1001" is input to the transmission processing block 101.

The multiplication circuits 111 to 114 multiply the respective symbols by a multiplication value corresponding to the even symmetric code "1001" (which associates "+1" with "1" of spreading code "1001" and "-1" with "0"). More specifically, the multiplication circuit 111 multiplies a multiplication value "+1", the multiplication circuit 112 multiplies a multiplication value "-1", the multiplication circuit 113 multiplies a multiplication value "-1" and the multiplication circuit 114 multiplies a multiplication value "+1".

As a result, chips subjected to spreading processing which become even symmetric or odd symmetric are obtained from the CDMA processing section 130. More specifically, chips subjected to spreading processing which become even symmetric with respect to the multiplier 112 and multiplier 113 as a boundary are obtained from the CDMA processing section 130 of the transmission processing block 101.

The chips which are frequency spread outputs from the CDMA processing section 130 are sent to multipliers 121 to 124 of an OFDM processing section 140 as an orthogonal multicarrier modulation section. The multipliers 121 to 124 each multiply the chips which are their respective frequency spread outputs by subcarrier waveforms at frequencies 3/2 times, 1/2 times, -1/2 times and -3/2 times symbol rate $Ts^{-1}$ (where Ts is a symbol time length of a transmission symbol string) at the same timing. By the way, 3/2 times, 1/2 times, -1/2 times and -3/2 times referred to here means that the frequency fc of a subcarrier expressed in a complex number $e^{j2\ddot{o}fct}$ is (3/2)Ts, (1/2)Ts, (-1/2)Ts or (-3/2)Ts.

Thus, the OFDM processing section 140 assigns even symmetric or odd symmetric chips after spreading processing formed by the CDMA processing section 130 so that mutually symmetric chips are assigned to subcarriers having mutually opposite phases to modulate a plurality of mutually orthogonal subcarriers. An adder 150 adds up the outputs of the multipliers 121 to 124. This causes an OFDM-CDMA signal corresponding to one user to be output from the output terminal 151.

The other transmission processing blocks 102 to 104 also perform processing similar to that of the above-described transmission processing block 101. They differ in that user data to be processed is different and that the transmission processing blocks 103 and 104 perform spreading processing using odd symmetric codes.

The OFDM transmission apparatus 100 adds up the OFDM-CDMA signals corresponding to a plurality of users formed by the transmission processing blocks 101 to 104 using the adder 107 and thereby forms transmission OFDM-CDMA in which a plurality of pieces of user data U1(k) to U4(k) are subjected to frequency area spreading.

(3) Operation

In the above-described configuration, even symmetric codes are input to the transmission processing block 101 and therefore the trail of the OFDM-CDMA signal output from the transmission processing block 101 moves on the 1-axis on the I-Q plane. Likewise, since even symmetric codes are also input to the transmission processing block 102, the signal trail of the OFDM-CDMA signal output from the transmission processing block 102 also moves on the 1-axis on the I-Q plane.

On the other hand, since odd symmetric codes are input to the transmission processing blocks 103 and 104, the signal trail of the OFDM-CDMA signal output from the transmission processing blocks 103 and 104 moves on the Q-axis of the I-Q plane.

Therefore, the addition result of the OFDM-CDMA signals output from the transmission processing blocks 101 and 102 moves on the I-axis and the addition result of the OFDM-CDMA signals output from the transmission processing blocks 103 and 104 moves on the Q-axis. As a result, the vector on the I-Q plane of the transmission OFDM-CDMA signal finally output from the adder 107 becomes a vector combining the vector moving on the I-axis and the vector moving on the Q-axis.

This causes the final combined vector to become a vector combining mutually orthogonal vectors, and can thereby reduce the combined vector. As a result, the peak voltage of the transmission OFDM-CDMA signal can be reduced.

Furthermore, the code assignment section 106 makes the number of transmission processing blocks to which even symmetric codes are assigned equal to the number of transmission processing blocks to which odd symmetric codes are assigned, which makes the peak on the I-axis obtained by adding up signals output from the transmission processing blocks 101 and 102 with even symmetric codes assigned almost equal to the peak on the Q-axis obtained by adding up the signals output from the transmission processing blocks 103 and 104 with odd symmetric codes assigned.

As a result, the combined vector becomes a combination of the vectors of two mutually neighboring sides of a square, and therefore it is possible to obtain a much smaller combined vector. This can further reduce the peak voltage of the transmission OFDM-CDMA signal.

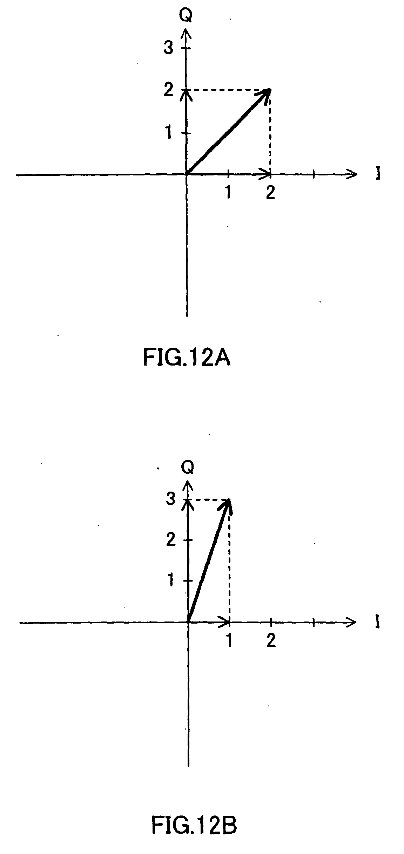

For example, when the peak of the OFDM-CDMA signal output from the transmission processing blocks 101 to 104 is assumed to be "1", the peak value of the transmission OFDM-CDMA signal of the OFDM transmission apparatus 100 of this embodiment becomes "$2\sqrt{2}$" as shown in FIG.12A.

In contrast, suppose a case where even symmetric codes are assigned only to the transmission processing block 101 and odd symmetric codes are assigned to the transmission processing blocks 102 to 104. In this case, as shown in FIG.12B, the peak of the signal output from the transmission processing block 101 is on the 1-axis and its value is "1". In contrast, the peak of the signal output from the transmission processing blocks 102 to 104 is on the Q-axis and its value is "3". As a result, the magnitude of the vector combining these vectors, that is, the peak of the transmission OFDM-CDMA signal becomes $\sqrt{10}(>2\sqrt{2})$.

(4) Effects

According to the above-described configuration, when transmission data is modulated using the OFDM-CDMA system and transmitted, transmission data is spread using even symmetric codes and odd symmetric codes as spreading codes and the even symmetric or odd symmetric chips after spreading processing are adapted so that mutually symmetric chips are assigned to subcarriers having mutually opposite phases, which allows the peak voltage of the transmission OFDM-CDMA signal to be suppressed effectively. As a result, it is possible to obtain demodulated data with less distortion on the receiving side.

Furthermore, making the number of transmission processing blocks 101, 102 for forming OFDM-CDMA signals using even symmetric codes equal to the number of transmission processing blocks 103, 104 for forming OFDM-CDMA signals using odd symmetric codes allows the peak voltage of the transmission OFDM-CDMA signal to be further suppressed.

(Embodiment 2)

(1) Principles

Focusing on the fact that when OFDM-CDMA signals obtained through spreading processing using even symmetric codes and odd symmetric codes are divided into a total of N groups, N/2 signals each, signals of each group move on the same straight line on the I-Q plane, this embodiment gives a phase offset to signals of each group and thereby causes the signals of each group to move on straight lines at intervals of the same angle. This allows the peak of a signal combining the signals of each group to be uniformly dispersed on the I-Q plane, thus making it possible to further suppress the peak voltage of the final transmission OFDM-CDMA signal.

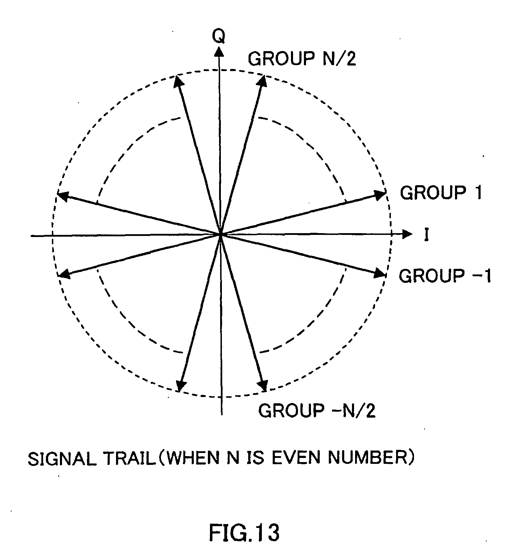

Here, if the number of multiplexed spreading codes is assumed to be ($M \times N$), M spreading codes are assigned to each group. Then, as shown in FIG.13, a phase offset is given so that signals between groups move on straight lines at intervals of $(180/N)°$. Then, the peak amplitude value at each group becomes M times the peak when a normal one code is used. Therefore, considering the symmetry of FIG.13, the total peak value obtained by adding up peak values of each group is multiplied by the value in the following expression:
WHEN N IS AN EVEN NUMBER:

$$2\sum_{k=0}^{\frac{N}{2}-1} \cos \frac{\pi}{N}\left(k+\frac{1}{2}\right) \leqq N$$

$$1+2\sum_{k=1}^{\frac{N-1}{2}} \cos \frac{\pi}{N}k \leqq N$$

$$\cdots(1)$$

Therefore, the total peak value is reduced compared to normal code multiplexing as shown in the following expression:
WHEN N IS AN EVEN NUMBER:

$$\frac{M \times 2\sum_{k=0}^{\frac{N}{2}-1} \cos \frac{\pi}{N}\left(k+\frac{1}{2}\right)}{MN}$$

$$=\frac{2}{N}\sum_{k=0}^{\frac{N}{2}-1} \cos \frac{\pi}{N}\left(k+\frac{1}{2}\right) \text{ TIMES } \leqq 1$$

WHEN N IS AN ODD NUMBER;

$$\frac{M \times \left(1+2\sum_{k=1}^{\frac{N-1}{2}} \cos \frac{\pi}{N}k\right)}{MN}$$

$$=\frac{1}{N}\left(1+2\sum_{k=1}^{\frac{N-1}{2}} \cos \frac{\pi}{N}k\right) \text{ TIMES } \leqq 1$$

$$\cdots(2)$$

The processing here only performs code multiplexing while giving a phase offset so that the signal trail of each group becomes as shown in FIG.13, and therefore transmit power never changes. Therefore, the above-described peak value reduction effect itself results in a reduction of the peak factor. Furthermore, if the above-described phase offset value is also regarded as a known value on the receiving side, it is only necessary for the receiving side to return the phase by an amount corresponding to the offset, and therefore the transmission characteristic never deteriorates.

(2) Configuration

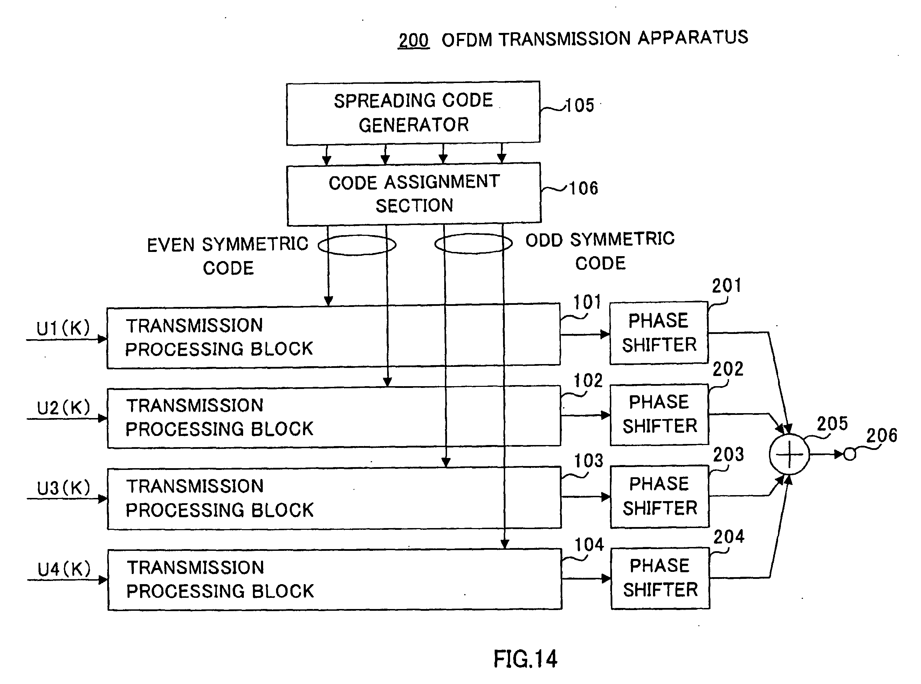

In FIG.14 in which the parts corresponding to those in FIG.10 are assigned the same reference numerals, reference numeral 200 shows a configuration of an OFDM transmission apparatus according to Embodiment 2 of the present invention as a whole. The OFDM transmission apparatus 200 is provided with phase shifters 201 to 204 that rotate the phases of OFDM-CDMA signals output from the transmission processing blocks 101 to 104 by predetermined angles.

In the case of this embodiment, since the number of groups N is 4, the phase shifters 201 to 204 give phase offsets so that the signal trail of each group moves on straight lines at intervals of $(180/4)° = 45°$. More specifically, the phase shifters 201, 202, 203 and 204 are designed to rotate the phases of their respective input signals by $45°$, $90°$, $45°$ and $90°$ respectively.

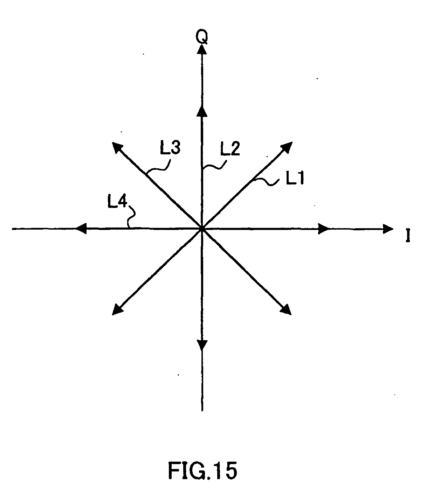

As a result, the OFDM-CDMA signal which is output from the transmission processing block 101 and moves on the I-axis is given a phase offset of $45°$ by the phase shifter 201 and this causes the OFDM-CDMA signal to move on a straight line L1 shown in FIG.15. Furthermore, the OFDM-CDMA signal which is output from the transmission processing block 102 and moves on the 1-axis is given a phase offset of $90°$ by the phase shifter 202 and this causes the OFDM-CDMA signal to move on a straight line L2 (Q-axis).

Furthermore, the OFDM-CDMA signal which is output from the transmission processing block 103 and moves on the Q-axis is given a phase offset of $45°$ by the phase shifter 203 and this causes the OFDM-CDMA signal to move on a straight line L3 . Furthermore, the OFDM-CDMA signal which is output from the transmission processing block 104 and moves on the Q-axis is given a phase offset of $90°$ by the phase shifter 204 and this causes the OFDM-CDMA signal to move on a straight line L4 (1-axis).

The OFDM-CDMA signals of the user data U1(k) to U4(k) which have been given phase offsets by the phase shifters 201 to 204 are added up by the adder 205 and a transmission OFDM-CDMA signal is output through an output terminal 206.

(3) Operation

In the above configuration, the signal trail of the transmission OFDM-CDMA signal output from the OFDM transmission apparatus 200 is a combination of the signals which move on the straight lines L1 to L4 in FIG.15. The straight lines L1 to L4 here are arranged in such a way as to disperse in all directions centered on the origin on the I-Q plane, and therefore the magnitude of their combined vector never outstands in a certain direction. As a result, it is possible to suppress the peak voltage of the transmission OFDM-CDMA signal output from the OFDM transmission apparatus 200.

Here, assuming the peak voltage of the OFDM-CDMA signals output from the phase shifters 201 to 204 on the I-Q plane is "1", a case where signal points of the transmission processing blocks 101, 102, 103 and 104 exist on $(I,Q)=(1/\sqrt{2},1/\sqrt{2})$, $(0,1)$, $(-1/\sqrt{2},1/\sqrt{2})$, $(-1,0)$ as a state in which the peak voltage of the combined signal reaches a maximum (that is, signal points of the respective signals are located in similar directions) will be considered. The signal point of the combined signal at this time is $(I,Q)=(-1,1+\sqrt{2})$. Therefore, the magnitude of the vector is $\sqrt{(4+2\sqrt{2})}$.

Under the same condition, this is compared with the peak voltage of the OFDM transmission apparatus 100 of Embodiment 1. In the case of the OFDM transmission apparatus 100, the combined signal becomes the largest when the signal points of the transmission processing blocks 101, 102, 103 and 104 are $(I,Q)=(1,0)$, $(1,0)$, $(0,1)$, $(0,1)$ and the magnitude of the vector is $2\sqrt{2}$.

Thus, the magnitude of the vector of $\sqrt{(4+2\sqrt{2})}$ of the combined signal of this embodiment is smaller than the magnitude of the vector of $2\sqrt{2}$ of the combined signal of Embodiment 1, and therefore it can be appreciated that the OFDM transmission apparatus 200 of this embodiment has a greater peak suppression effect.

That is, in the case of the OFDM transmission apparatus 100 of Embodiment 1, the OFDM-CDMA signals output from both the transmission processing block 101 and transmission processing block 102 move on the 1-axis, and therefore these signals move drastically on the I-axis. Likewise, the OFDM-CDMA signals output from both the transmission processing block 103 and transmission processing block 104 move on the Q-axis, and therefore these signals move drastically on the Q-axis.

In contrast, in the case of the OFDM transmission apparatus 200 of this embodiment, the signal obtained by spreading using the same even symmetric code does not move on the 1-axis alone but moves on different straight lines, which allows the directions in which a peak occurs to be dispersed further. The same applies to signals spread using odd symmetric codes.

This is completely different from the conventional way of simply dispersing signals obtained by spreading codes randomly on the I-Q plane, but it is intended to disperse the directions of straight lines for the signals that move on the straight lines according to even symmetric codes or odd symmetric codes to prevent the straight lines from being directed in similar directions.

That is, using even symmetric or odd symmetric spreading codes, trails of transmission signals are moved only on the straight lines on the I-Q plane, a phase offset is selected as appropriate and in this way, the straight lines on which the trails of transmission signals are moved are placed at an angle as close to $90°$ as possible. As a result, it is possible to reduce the combined vector of the trails of transmission signals on the I-Q plane and thereby reduce the peak amplitude of a transmission OFDM-CDMA signal.

(4) Effects

According to the above-described configuration, by performing spreading using even symmetric codes or odd symmetric codes, the OFDM-CDMA signals of each group that move on the 1-axis or Q-axis are given a predetermined phase offset for each group so that they move on straight lines at intervals of the same angle, and in this way it is possible to implement the OFDM transmission apparatus 200 capable of further suppressing a peak voltage.

(Embodiment 3)

(1) Principles

For simplicity of explanation, aforementioned Embodiment 1 and Embodiment 2 have described the case where signals subjected to BPSK modulation processing at the transmission processing blocks 101 to 104 of the OFDM transmission apparatuses 100 and 200 are subjected to OFDM-CDMA modulation. However, this embodiment will describe a case where m-value PSK-modulated signals such as QPSK modulation in transmission processing blocks are subjected to OFDM-CDMA modulation.

As in the case of above-described Embodiment 2, focusing on the fact that when OFDM-CDMA signals obtained through spreading using even symmetric codes and odd symmetric codes are divided into a total of N groups, N/2 signals each, signals of each group move on the same straight line on the I-Q plane, this embodiment gives phase offsets to signals of each group to cause the signal of each group to move on straight lines at intervals of the same angle.

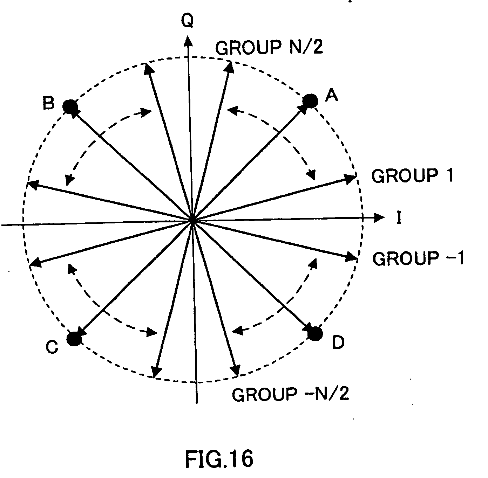

Here, if the number of multiplexed spreading codes is assumed to be (MXN), M spreading codes are assigned to each group. Then, as shown in FIG.16, a phase offset is given so that signals between groups move on straight lines at intervals of $(360/(m \times N))°$ considering that each transmission processing block processes m-value PSK-modulated signals. Then, the peak amplitude value at each group becomes M times the peak when a normal one code is used.

Therefore, as in the case of Embodiment 2, considering the symmetry of FIG.16, the total peak value of transmission OFDM-CDMA signals in this embodiment is reduced compared to normal code multiplexing as shown in the following expression:

WHEN N IS AN EVEN NUMBER:

$$\frac{M \times 2 \sum_{k=0} \cos \frac{2\pi}{mN}\left(k + \frac{1}{2}\right)}{MN}$$

$$= \frac{2}{N} \sum_{k=0}^{\frac{N}{2}-1} \cos \frac{2\pi}{mN}\left(k + \frac{1}{2}\right) \text{ TIMES} \leqq 1$$

$$\frac{M \times \left(1 + 2 \sum_{k=1}^{\frac{N-1}{2}} \cos \frac{2\pi}{mN} k\right)}{MN}$$

$$= \frac{1}{N}\left(1 + 2 \sum_{k=1}^{\frac{N-1}{2}} \cos \frac{2\pi}{mN} k\right) \text{ TIMES} \leqq 1$$

$$\cdots (3)$$

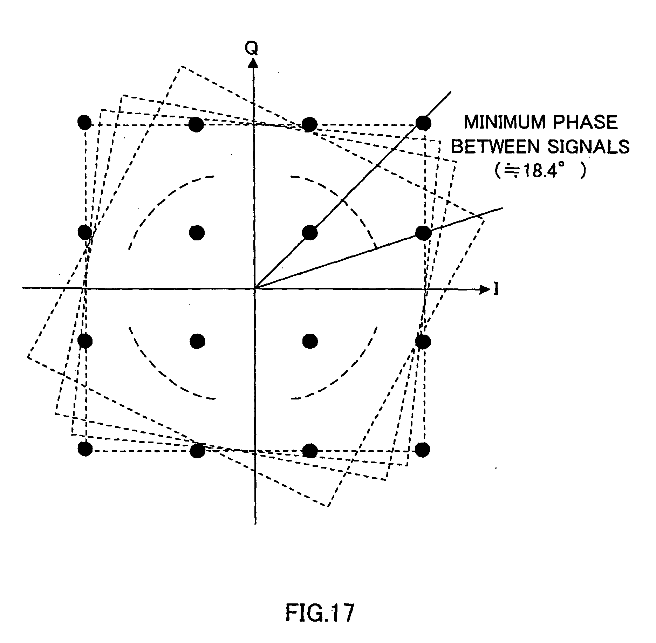

Here, signal trails of transmission OFDM-CDMA signals when the method of this embodiment is applied to a QPSK modulated signal and a 16-value QAM modulated signal are shown in FIG.16 and FIG.17, respectively. In FIG.

16, the original signal points of a QPSK modulation are four points A, B, C and D and even symmetric codes and odd symmetric codes are used, and therefore their signal trails move on a straight line AC or straight line BD.

That is, a signal trail is located on the straight line AC when "point A or point C is transmitted using even symmetric codes" or "point B or point D is transmitted using odd symmetric codes." On the other hand, a signal trail is located on the straight line BD when "point B or point D is transmitted using even symmetric codes" or "point A or point C is transmitted using odd symmetric codes."

Thus, by dividing $(360/m)° = (360/4)° = 90°$ by N and assigning it to each group of spreading codes, the above-described peak factor suppression effect can be obtained. It is understandable that for m-value PSK, a minimum phase difference $(360/m)°$ of signal points can be divided by N.

In FIG.17, original signal points of a 16-value QAM modulated signal are 16 points expressed by black bullets and signal trails of transmission OFDM-CDMA signals vary depending on which of the even symmetric code or odd symmetric code is used or which signal point is transmitted, but it is obvious that the signal trails are on straight lines that pass through signal points expressed by the black bullets or straight lines orthogonal thereto.

Therefore, by dividing a minimum phase difference of $18.4°$ of signal points by N and assigning it to each group of codes, it is possible to obtain peak factor suppression effects similar to those described above.

(2) Configuration and operation

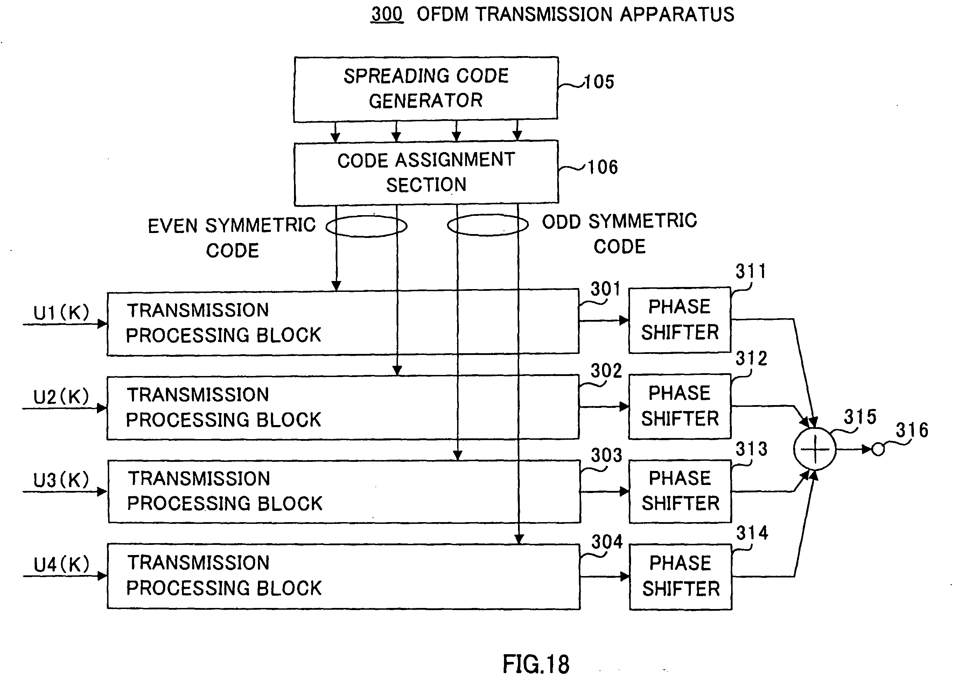

In FIG.18 in which the parts corresponding to those in FIG.14 are assigned the same reference numerals, reference numeral 300 shows an OFDM transmission apparatus according to Embodiment 3 of the present invention as a whole. In the OFDM transmission apparatus 300, transmission processing blocks 301 to 304 are designed to perform QPSK modulation processing and OFDM-CDMA modulation processing. Here, the transmission processing blocks 301 and 302 are fed even symmetric codes and the transmission processing blocks 303 and 304 are fed odd symmetric codes.

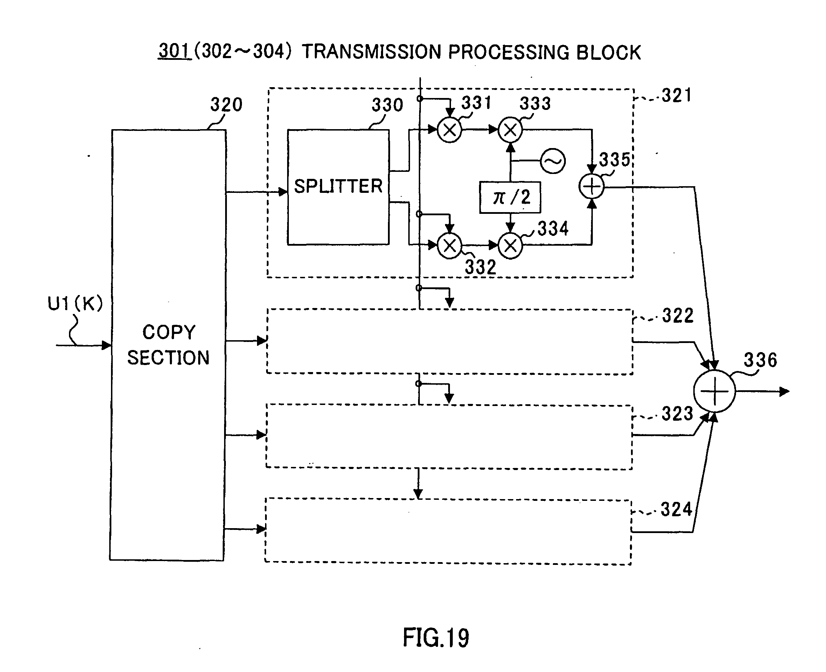

The transmission processing blocks 301 to 304 in this embodiment are constructed as shown in FIG.19. Here, the transmission processing block 301 that processes user data U1(k) will be explained. A copy section 320 of the transmission processing block 301 is fed the user data U1(k) and the copy section 320 copies the same number of pieces of user data U1(k) as subcarriers.

There are transmission processing blocks 301 corresponding in number to subcarriers and the transmission processing blocks 301 have their respective OFDM-CDMA processing sections 321 to 324 in the same configuration. The configuration of the OFDM-CDMA processing section 321 will be explained below.

The OFDM-CDMA processing section 321 inputs the user data U1(k) copied by the copy section 320 to a splitter circuit 330. The splitter circuit 330 divides the input data into two lines. For example, when data "1" and "0" are input in that order, the data "1" is sorted out for the first line, while the data "0" is sorted out for the second line.

As in the case of the above-described multiplier 111 (FIG.11), a spreading code portion corresponding to one chip is input to the multipliers 331 and 332. Therefore, the multipliers 331 and 332 as a whole carry out processing of multiplying the data corresponding to the two input bits by the same spread chip.

Then, the multipliers 333 and 334 multiply the outputs of the multipliers 331 and 332 by subcarrier waveforms of frequencies 3/2 times a symbol rate $Ts^{-1}$ at the same timing. By the way, multipliers (not shown) corresponding to the multipliers 333 and 334 of the other OFDM-CDMA processing sections 322 to 324 multiply subcarrier waveforms of frequencies 1/2 times, -1/2 times and -3/2 times the symbol rate $Ts^{-1}$, respectively at the same timing. At this time, the multiplier 334 is designed to multiply a subcarrier whose phase is shifted by $\pi/2$ with respect to the subcarrier waveformto be multiplied by the multiplier 333.

The outputs of the multipliers 333 and 334 are added up by the adder 335. In this way, an OFDM-CDMA signal in which user data U1(k) corresponding to two bits is spread by a one-chip spreading code (that is, QPSK-modulated) is formed. The outputs of the OFDM-CDMA processing sections 321 to 324 are added up by an adder 336. In this way, from the adder 336, user data U1(k) corresponding to two bits is spread by a spreading code of four chips and a QPSK-OFDM-CDMA signal with the spread chips superimposed on four orthogonal subcarriers is output.

FIG.18 will be referenced again to continue the explanation. The OFDM transmission apparatus 300 sends the QPSK-OFDM-CDMA signals output from the transmission processing blocks 301 to 304 to phase shifters 311 to 314 provided for the transmission processing blocks 301 to 304. The phase shifters 311 to 314 give phase offsets so that signals between the groups move on straight lines at intervals of $(360/(m \times N))° = (360/(4 \times 4))° = 22.5°$ according to the rules explained in the section of the aforementioned principles of this embodiment.

More specifically, the phase shifters 311, 312, 313 and 314 rotate the phases of the input QPSK-OFDM-CDMA signals by $22.5°$, $45°$, $67.5°$ and $90°$ respectively. This causes the signals between the groups to move on straight lines at intervals of $22.5°$ without overlapping with one another on the same straight lines.

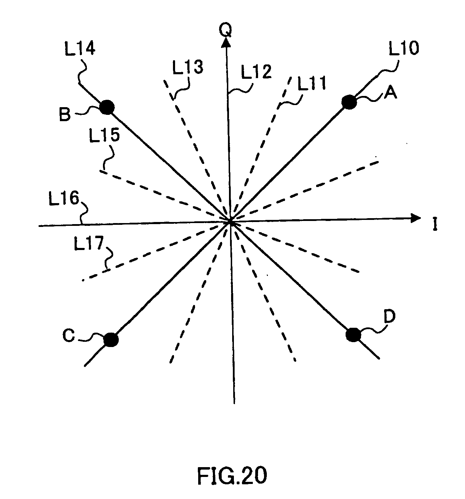

This will be explained using FIG.20. First, for simplicity of explanation, only operations of the transmission processing block 301 and phase shifter 311 will be explained. With QPSK modulation, signal points of modulated signals according to the user data U1(k) are any one of point A, point B, point C or point D in the figure. When these signal points are spread using even symmetric codes, the symbol at point A moves on a straight lineL10, the symbol at point B moves on a straight line L14, the symbol at point C moves on a straight line L10 and the symbol at point D moves on a straight line L14.

Furthermore, when odd symmetric codes are used, the phases of the respective signal trails rotate by only $\pi/2$ and signal trails after spreading processing of the respective symbols at points A to D move on the straight line L10 or L14. Thus, in the case of the QPSK modulation, signal trails when even symmetric codes or odd symmetric codes are used move on the mutually orthogonal straight lines L10 and L14 including point A, point C and point B, point D, respectively.

Then, the phase shifter 311 rotates the phases of these straight lines L10 and L14 by 22.5° so that the signal trail of the output of the transmission processing block 301 moves on the straight lines L11 and L15. Furthermore, the phase shifter 312 rotates the phases of the straight lines L10 and L14 by 45° so that the signal trail of the output of the transmission processing block 302 moves on the straight lines L12 and L16.

The phase shifter 313 rotates the phases of the straight lines L10 and L14 by 67.5° so that the signal trail of the output of the transmission processing block 303 moves on the straight lines L13 and L17. Furthermore, the phase shifter 314 rotates the phases of the straight lines L10 and L14 by 90° so that the signal trail of the output of the transmission processing block 304 moves on the straight lines L14 and L10.

Thus, the signals which are output from the transmission processing blocks 301 to 304 and move the straight lines L10 and L14 are arranged by the phase shifters 311 to 314 into transmission OFDM-CDMA signals which move on the straight lines L10 to L14 without overlapping with one another at intervals of the same angle.

As a result, by avoiding signal points from concentrating on the same direction on the I-Q plane, it is possible to suppress a peak voltage effectively.

(3) Effects

According to the above-described configuration, when an OFDM-CDMA signal corresponding to 1 user data is regarded as a unit processing group and subjected to spreading processing using even symmetric codes or odd symmetric codes in each group and when m-value PSK modulation such as QPSK modulation is used, phase offsets are given so that signals between the groups move on the straight lines at intervals of $(360/(m\times N))°$, and it is thereby possible to suppress the peak voltage of the transmission OFDM-CDMA signal.

(Other Embodiments)

Above-described Embodiment 3 has described the case where transmission data is QPSK-modulated, but the present invention is not limited to this, and it is also applicable to other modulation systems such as 8-phase PSK. For example, when four pieces of user data is transmitted as an OFDM-CDMA signal using 8-phase PSK, phase offsets can be given based on the above-described express ion of $(360/(m\times N))°$ so that straight lines on which the OFDM-CDMA signal of each piece of the user data are arranged at intervals of $(360/(8\times 4))° = 11.25°$.

Furthermore, the aforementioned embodiment has described the configuration shown in FIG.11 and FIG.19 as the configuration that implements the OFDM transmission method according to the present invention, but the present invention is not limited to this configuration example, and it is widely applicable to an OFDM transmission apparatus that carries out frequency area spreading processing of the OFDM-CDMA system.

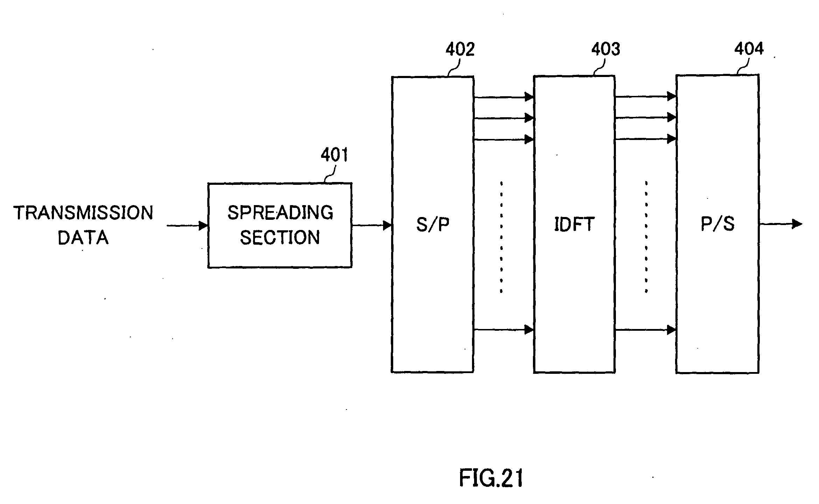

For example, as shown in FIG.21, it is also possible to spread transmission data by a spreading section 401 using even symmetric codes or odd symmetric codes, serial/parallel-convert the spread signals by a serial/parallel conversion section (S/P) 402, subject the serial/parallel-converted signal to inverse discrete Fourier transform by an inverse discrete Fourier transform section (IDFT) 403, and parallel/serial-convert the signal after discrete Fourier transformby a parallel/serial conversion section (P/S) 404 to form a transmission OFDM-CDMA signal. In this case, the spreading section 401 functions as the spreading processing section and the parallel/serial conversion section 402, inverse discrete Fourier transform section 403 and parallel/serial conversion section 404 function as an orthogonal multicarrier modulation section. Furthermore, to rotate the phase of each subcarrier, it is possible to provide a phase shifter between the inverse discrete Fourier transform section 403 and parallel/serial conversion section 404.

The present invention is not limited to the above-described embodiments, but can be implemented modified in various ways.

The OFDM transmission apparatus of the present invention adopts a configuration including a spreading processing section that spreads transmission data using even symmetric codes and odd symmetric codes as spreading codes and an orthogonal multicarrier modulation section that modulates a plurality of mutually orthogonal subcarriers by adapting even symmetric or odd symmetric chips after spreading processing formed by the spreading processing section so that mutually symmetric chips are assigned to subcarriers having mutually opposite phases.

According to this configuration, the spreading processing section spreads one symbol of transmission data into an even symmetric or odd symmetric chip according to an even symmetric code or odd symmetric code. For spread chips spread by even symmetric codes, the orthogonal multicarrier modulation section forms signal points with the phase rotating from the same starting point on the same circumference on an I-Q plane by a same angle in mutually opposite directions. On the other hand, for spread chips spread by odd symmetric codes, the orthogonal multicarrier modulation section forms signal points with the phase rotating from the starting points whose phases are different by 180° on the same circumference on the I-Q plane by a same angle in mutually opposite directions. As a result, a combined signal point after orthogonal multicarrier modulation of symbols spread by even symmetric codes moves on a predetermined straight line. Furthermore, a combined signal point after orthogonal multicarrier modulation of symbols spread by odd symmetric codes moves on a straight line orthogonal to the straight line of the even symmetric code on the I-Q plane. This causes the combined signal vector output from the orthogonal multicarrier modulation section to become the one that combines signal vectors that move on mutually orthogonal straight lines, and can thereby reduce the magnitude of the combined signal vector compared to the case where signal points are concentrated at a similar position on the I-Q plane. Thus, using even symmetric codes and odd symmetric codes as spreading codes allows the combined signal vector after orthogonal multicarrier modulation to become a combined vector of signal points that move on mutually orthogonal straight lines, and can thereby suppress the peak voltage of the OFDM-CDMA signal.

Furthermore, the OFDM transmission apparatus of the present invention adopts a configuration including a spreading processing section that spreads a plurality of pieces of transmission data using even symmetric codes or odd symmetric codes, an orthogonal multicarrier modulation section that modulates a plurality of mutually orthogonal subcarriers by adapting chips after spreading processing for each piece of transmission data so that mutually symmetric chips are assigned to subcarriers having mutually opposite phases and a phase rotation section that rotates the phase of the modulated signal of each piece of transmission data output from the orthogonal multicarrier modulation section for each modulated signal of the transmission data.

According to this configuration, the trail of the combined signal of the transmission data after modulation moves on straight lines on the I-Q plane, but if the straight lines of the transmission data overlap with one another, the combined signal finally output from the orthogonal multicarrier modulation section finally has a greater vector in the direction of the straight line, and therefore the phase rotation section carries out phase rotation processing to prevent the overlapping between the straight lines. As a result, it is possible to further disperse signal points and further suppress the peak voltage of the OFDM-CDMA signal.

Furthermore, the present invention adopts a configuration, wherein the phase rotation section rotates the phase so that the trails of modulated signals of transmission data that move on straight lines on the I-Q plane are arranged at intervals of almost the same angle on the I-Q plane.

This configuration allows signal points of the transmission data subjected to spreading processing and orthogonal multicarrier modulation processing to be distributed almost uniformly on the I-Q plane, making it possible to further suppress the peak voltage of the transmission OFDM-CDMA signal.

Furthermore, the present invention adopts a configuration, wherein when transmission data has N groups and orthogonal multicarrier CDMA signals output from the orthogonal multicarrier modulation section are m-value PSK modulated signals, the phase rotation section rotates the phases of modulated signals so that straight lines on which the trails of the modulated signals of the transmission data move are arranged at intervals of an angle of $360°/(m \times N)$ on the I-Q plane.

According to this configuration, when, for example, there are four pieces of transmission data and the orthogonal multicarrier CDMA signal is a QPSK modulated signal (m=4), the transfer rotation section rotates the phase of the modulated signal so that straight lines on which the trails of modulated signals of the transmission data move are arranged at intervals of an angle of 22.5°. As a result, when transmission data of N groups is subjected to m-value PSK modulation, final signal points of OFDM-CDMA signals can be dispersed uniformly without concentrating in one direction of the I-Q plane. This makes it possible to suppress the peak voltage of the OFDM-CDMA signals.

Furthermore, the present invention adopts a configuration, wherein the spreading processing section performs spreading processing using substantially the same number of even symmetric codes as odd symmetric codes.

According to this configuration, the combined signal point on the I-Q plane of spread chips of transmission data spread by even symmetric codes and the combined signal point on the I-Q plane of spread chips of transmission data spread by odd symmetric codes move on mutually orthogonal straight lines, but if the number of pieces of transmission data spread us ing even symmetric codes is substantially equal to the number of pieces of transmission data spread using odd symmetric codes, the final combined signal vector of the OFDM-CDMA signal output from the orthogonal multicarrier modulation section becomes a combined vector of vectors of two neighboring sides of a square. As a result, it is possible to further suppress the peak voltage of the OFDM-CDMA signals.

Furthermore, the radio base station apparatus of the present invention adopts a configuration including the above-described OFDM transmission apparatus.

Furthermore, the OFDM transmission method of the present invention spreads transmission data using odd symmetric codes or even symmetric codes as the spreading codes, adapts chips after spreading processing so that mutually symmetric chips are assigned to subcarriers having mutually opposite phases and thereby modulates a plurality of mutually orthogonal subcarriers.

According to this method, one symbol of transmission data is spread into an even symmetric or odd symmetric chip according to the even symmetric code or odd symmetric code. When spread chips which are spread by even symmetric codes and located at mutually symmetrical positions are assigned to subcarriers having opposite phases, signal points whose phases rotate by the same angle from the same starting point on the same circumference of the I-Q plane in mutually opposite directions are formed. On the other hand, for spread chips spread by odd symmetric codes, signal points whose phases rotate by the same angle from starting points with a 180° phase difference on the same circumference on the I-Q plane in mutually opposite directions are formed. As a result, the combined signal point after orthogonal multicarrier modulation of symbols spread by even symmetric codes moves on a predetermined straight line. Furthermore, the combined signal point after orthogonal multicarrier modulation of symbols spread by odd symmetric codes moves on a straight line orthogonal to the straight line of the even symmetric codes on the I-Q plane. This causes the combined signal vector output from the orthogonal multicarrier modulation section to be the one combining signal vectors that move on mutually orthogonal straight lines, and can thereby reduce the magnitude of the combined signal vector compared to the case where signal points are concentrated at similar positions on the I-Q plane. Thus, using even symmetric codes and odd symmetric codes as spreading codes allows the combined signal vector after the orthogonal multicarrier modulation to be the vector combining signal points that move on mutually orthogonal straight lines, and can thereby suppress the peak voltage of the OFDM-CDMA signals.

As explained above, when an OFDM-CDMA signal is formed, the present invention causes signal points of modulated signals of transmission data to move on different straight lines on the I-Q plane, and can thereby disperse signal points uniformly and control the peak voltage of the transmission OFDM-CDMA signal consequently.

This application is based on the Japanese Patent Application No. 2001-297174 filed on September 27, 2001, entire content of which is expressly incorporated by reference herein.

Industrial Applicability

The present invention is applicable to a transmitter that transmits signals according to an OFDM-CDMA system.

**Claims**

**1.** An OFDM transmission apparatus comprising:

a spreading processing section that spreads transmission data using even symmetric codes and odd symmetric codes as spreading codes; and
an orthogonal multicarrier modulation section that modulates a plurality of mutually orthogonal subcarriers by adapting even symmetric or odd symmetric chips after spreading processing formed by said spreading processing section so that mutually symmetric chips are assigned to subcarriers having mutually opposite phases.

**2.** An OFDM transmission apparatus comprising:

a spreading processing section that spreads a plurality of pieces of transmission data using even symmetric codes or odd symmetric codes;
an orthogonal multicarrier modulation section that modulates a plurality of mutually orthogonal subcarriers by adapting chips after spreading processing for each piece of transmission data so that mutually symmetric chips are assigned to subcarriers having mutually opposite phases; and
a phase rotation section that rotates the phase of the modulated signal of each piece of transmission data output from said orthogonal multicarrier modulation section for each modulated signal of said transmission data.

**3.** The OFDM transmission apparatus according to claim 2, wherein said phase rotation section rotates the phase so that the trails of the modulated signals of the transmission data that move on straight lines on the I-Q plane are arranged at intervals of almost the same angle on the I-Q plane.

**4.** The OFDM transmission apparatus according to claim 3, wherein when the transmission data has N groups and orthogonal multicarrier CDMA signals output from said orthogonal multicarrier modulation section are m-value PSK modulated signals, said phase rotation section rotates the phases of the modulated signals so that straight lines on which the trails of the modulated signals of the transmission data move are arranged at intervals of an angle of $360°/(m \times N)$ on the I-Q plane.

5. The OFDM transmission apparatus according to claim 2, wherein said spreading processing section performs spreading processing using substantially the same number of even symmetric codes as odd symmetric codes.

6. A radio base station apparatus provided with an OFDM transmission apparatus, said OFDM transmission apparatus comprising:

   a spreading processing section that spreads transmission data using even symmetric codes and odd symmetric codes as spreading codes; and
   an orthogonal multicarrier modulation section that modulates a plurality of mutually orthogonal subcarriers by adapting even symmetric or odd symmetric chips after spreading processing formed by said spreading processing section so that mutually symmetric chips are assigned to subcarriers having mutually opposite phases.

7. An radio base station apparatus provided with an OFDM transmission apparatus, said OFDM transmission apparatus comprising:

   a spreading processing section that spreads a plurality of pieces of transmission data using even symmetric codes or odd symmetric codes;
   an orthogonal multicarrier modulation section that modulates a plurality of mutually orthogonal subcarriers by adapting chips after spreading processing for each piece of transmission data so that mutually symmetric chips are assigned to subcarriers having mutually opposite phases; and
   a phase rotation section that rotates the phase of the modulated signal of each piece of transmission data output from said orthogonal multicarrier modulation section for each modulated signal of said transmission data.

8. An OFDM transmission method comprising the steps of:

   spreading transmission data using odd symmetric codes or even symmetric codes as spreading codes;
   modulating a plurality of mutually orthogonal subcarriers by adapting chips after spreading processing so that mutually symmetric chips are assigned to subcarriers having mutually opposite phases.

EP 1 447 931 A1

FREQUENCY
AXIS

N DIGITAL
SYMBOLS

1   2   3                                        N

B

- - - - - - -

TIME AXIS

T

FIG.1 (PRIOR ART)

FREQUENCY AXIS

N DIGITAL SYMBOLS

1 2 3 ... N

M SUBCARRIERS

M
⋮
3
2
1

········

DIGITAL SYMBOLS 1

DIGITAL SYMBOLS 2

DIGITAL SYMBOLS 3

⋮

DIGITAL SYMBOLS N

FIG.2 (PRIOR ART)

EP 1 447 931 A1

EP 1 447 931 A1

U1(K) → TRANSMISSION PROCESSING BLOCK (CODE"1100") — 11

U2(K) → TRANSMISSION PROCESSING BLOCK (CODE"0110") — 12

U3(K) → TRANSMISSION PROCESSING BLOCK (CODE"0101") — 13

U4(K) → TRANSMISSION PROCESSING BLOCK (CODE"1001") — 14

15

16

FIG.3 (PRIOR ART)

11(12~14) TRANSMISSION PROCESSING BLOCK

FIG.4 (PRIOR ART)

EP 1 447 931 A1

AMPLITUDE

-N    -k    -2-1 1 2    k    N

FREQUENCY (SUBCARRIER NUMBER)

FIG.5

AMPLITUDE

-k    -2    2    k

-N    -1 1    N

FREQUENCY (SUBCARRIER NUMBER)

FIG.6

AMPLITUDE

-N    -1 2    k

-k    -2 1    N

FREQUENCY (SUBCARRIER NUMBER)

FIG.7

Q

+kTH SUBCARRIER PHASE

SIGNAL POINT WHEN
TRANSMISSION
SYMBOL IS +1

I

-kTH SUBCARRIER PHASE

COMBINED TRAIL
OF ±kTH
SUBCARRIERS

FIG.8

Q

-kTH SUBCARRIER PHASE          +kTH SUBCARRIER PHASE

SIGNAL POINT WHEN
TRANSMISSION
SYMBOL IS +1

I

COMBINED TRAIL
OF ±kTH
SUBCARRIERS

FIG.9

20

**100** OFDM TRANSMISSION APPARATUS

SPREADING CODE GENERATOR ~105

CODE ASSIGNMENT SECTION ~106

EVEN SYMMETRIC CODE

ODD SYMMETRIC CODE

U1(K) → TRANSMISSION PROCESSING BLOCK ~101

U2(K) → TRANSMISSION PROCESSING BLOCK ~102

U3(K) → TRANSMISSION PROCESSING BLOCK ~103

U4(K) → TRANSMISSION PROCESSING BLOCK ~104

107

108

FIG.10

101(102~104) TRANSMISSION PROCESSING BLOCK

FIG.11

FIG.12A

FIG.12B

SIGNAL TRAIL (WHEN N IS EVEN NUMBER)

FIG.13

EP 1 447 931 A1

FIG.14

FIG.15

FIG.16

FIG.17

**300 OFDM TRANSMISSION APPARATUS**

FIG.18

EP 1 447 931 A1

301 (302~304) TRANSMISSION PROCESSING BLOCK

FIG.19

FIG.20

EP 1 447 931 A1

TRANSMISSION DATA →

**401**
SPREADING SECTION →

**402**
S/P

**403**
IDFT

**404**
P/S →

FIG.21

**EP 1 447 931 A1**

INTERNATIONAL SEARCH REPORT

| | International application No. |
|---|---|
| | PCT/JP02/09783 |

| A. CLASSIFICATION OF SUBJECT MATTER |
|---|
| Int.Cl⁷ H04J11/00, H04J13/04 |

According to International Patent Classification (IPC) or to both national classification and IPC

| B. FIELDS SEARCHED |
|---|
| Minimum documentation searched (classification system followed by classification symbols) |
| Int.Cl⁷ H04J11/00, H04J13/00-13/06, H04B1/69-1/713 |

Documentation searched other than minimum documentation to the extent that such documents are included in the fields searched

| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 2001-024617 A (NTT Docomo Inc.), 26 January, 2001 (26.01.01), Page 3, right column, line 5 to page 4, left column, line 22 (Family: none) | 1-8 |
| A | T.A. Wilkinson, A.E. Jpnes, "Minimisation of the Peak to Mean Envelope Power Ratio of Multicarrier Transmission Schemes by Block Coding", Vehicular Technology Conference, 1995 IEEE 45th, Vol.2, 28 July, 1995 (28.07.95), pages 825 to 829 | 1-8 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December, 2002 (05.12.02) | 17 December, 2002 (17.12.02) |

| Name and mailing address of the ISA/ | Authorized officer |
|---|---|
| Japanese Patent Office | |
| Facsimile No. | Telephone No. |

Form PCT/ISA/210 (second sheet) (July 1998)

33

**INTERNATIONAL SEARCH REPORT**

| International application No. |
| --- |
| PCT/JP02/09783 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 06-504175 A (Motorola, Inc.), 12 May, 1994 (12.05.94), Page 7, upper right column, line 10 to page 8, upper left column, line 2 & WO 93/09619 A1 & EP 0565652 A1 & US 5381449 A & DE 69227506 E & JP 3272355 B2 | 1-8 |
| A | JP 2000-286818 A (Fujitsu Ltd.), 13 October, 2000 (13.10.00), Page 6, left column, lines 17 to 48 (Family: none) | 1-8 |
| P,A | Takeo FUJII, Masao NAKAGAWA, "MC-CDMA ni okeru Fugo Sentaku Peak Denryoku Sakugen'ho", The Institute of Electronics, Information and Communication Engineers Gijutsu Kenkyu Hokoku, The Institute of Electronics, Information and Communication Engineers, Vol.101, No.371, 20 October, 2001 (20.10.01), pages 1 to 8 | 1-8 |
| E,A | JP 2002-033715 A (Matsushita Electric Industrial Co., Ltd.), 31 January, 2002 (31.01.02), Page 3, left column, line 47 to page 4, right column, line 5 (Family: none) | 1-8 |
| E,A | JP 2002-044052 A (Matsushita Electric Industrial Co., Ltd.), 08 February, 2002 (08.02.02), Page 4, left column, line 3 to page 5, right column, line 39 & WO 02/11334 A1 & AU 200227523 A & EP 1213864 A1 & KR 2002033209 A | 1-8 |
| E,A | JP 2002-271296 A (Matsushita Electric Industrial Co., Ltd.), 20 September, 2002 (20.09.02), Page 5, right column, lines 13 to 28 (Family: none) | 1-8 |

Form PCT/ISA/210 (continuation of second sheet) (July 1998)